# FASCICULE DE BREVET EUROPEEN

(11) **EP 1 052 893 B1**
(45) Date de publication et mention de la délivrance du brevet: **13.08.2003**
(21) Numéro de dépôt: 99901649.6
(22) Date de dépôt: 28.01.1999
(51) Int. Cl.: A01G 23/12

(54) **APPAREIL DE REALISATION D'ENTAILLES DANS LE TRONC D'UN ARBRE POUR LA COLLECTE DE PRODUITS SECRETES PAR LES ARBRES**
VORRICHTUNG ZUR DURCHFÜHRUNG VON EINSCHNITTEN IN DEN BAUMSTAMM ZUM ERNTEN VON VON BÄUMEN AUSGESCHIEDENEN PRODUKTEN
APPARATUS FOR MAKING CUTS IN A TREE TRUNK FOR COLLECTING PRODUCTS SECRETED BY TREES

(30) Priorité: 03.02.1998 FR 9801234; 09.07.1998 FR 9808841
(43) Date de publication de la demande: 22.11.2000
(73) Titulaire: LES DERIVES RESINIQUES ET TERPENIQUES, F-40100 Dax (FR)
(72) Inventeur: BARRANX, Alain, F-40180 Oeyreluy (FR); DE LAPORTERIE, Vincent, F-40100 Dax (FR); DE LA SAUZAY, Bruno, F-40100 Dax (FR); LAUILHE, Jean-Paul, F-40990 Saint-Paul lès Dax (FR); VIDAL, Alain, F-33000 Bordeaux (FR)
(74) Mandataire: Jacobson, Claude
(86) Numéro de dépôt international: FR9900174
(87) Numéro de publication internationale: WO99039566

(56) Documents cités:
- WO-A-82/01117
- FR-A- 691 361
- US-A- 3 959 925
- US-A- 4 090 328
- US-A- 4 291 492

## Description

La présente invention est relative à la collecte de produits sécrétés par des arbres et à l'amélioration de la récolte de la gemme de pin, ou oléorésine, produite par les arbres résineux (par exemple : pinus pinaster, pinus eliottii, pinus sylvestris, pinus nigra, pinus pinea, pinus palustris, pinus edulis, pinus canariensis, pinus merkusii, pinus kashya, ...), lorsque l'on entaille leur écorce suffisamment profondément pour atteindre la surface du bois. Elle se rapporte plus particulièrement à un appareil de réalisation d'entailles dans le tronc d'un arbre.

L'écoulement de tels produits permet à l'arbre de se protéger contre ses agresseurs naturels (insectes, champignons, ...) en fabriquant une couche d'oléorésine qui se desséchera à l'air par évaporation de la partie volatile qu'elle contient, pour former une croûte qui permettra à l'écorce de se régénérer. Il se forme autour de l'entaille une zone très riche en canaux sécréteurs de cette oléorésine, surtout sur le haut de l'entaille du fait de l'écoulement gravitaire.

Les produits constituant l'oléorésine, monoterpènes et acide résiniques, présentent un intérêt très important pour l'industrie dans des domaines très variés et très porteurs, comme la synthèse de matières premières pour parfums, encres, adhésifs ou autres.

L'invention vise à réaliser un appareil de réalisation d'entailles qui permet un procédé de collecte de la gemme susceptible d'obtenir ces produits à un prix concurrentiel par rapport aux matières premières d'origine pétrolière, sans porter atteinte à la qualité du bois des arbres.

En effet, les procédés utilisés actuellement ne conduisent qu'à une récolte partielle de l'écoulement, tant en laissant les canaux sécréteurs se boucher, qu'en laissant s'évaporer à l'air les produits volatils dont la valeur industrielle est très importante. De plus, les systèmes généralement utilisés mettent en place dans le bois des pièces métalliques dont la présence est préjudiciable pour l'industrie de découpe du bois.

Le document WO-A-82 01117 décrit un appareil selon le préambule de la revendication 1.

Dans les brevets FR 691,361, FR 725,773 et FR 725,774, on décrit un procédé de récolte de sécrétions d'arbres utilisant un appareil mécanique manuel permettant de préparer l'arbre pour y apposer un système "clos" de récolte de l'oléorésine.

Le brevet FR 2 746 582 décrit un système de récolte en vase clos appliqué à la technique de gemmage manuel traditionnel, et de distillation pelliculaire de l'oléorésine sur le site de la récolte, dans un véhicule spécialement équipé.

Les brevets US 3 959 925 et US 4 291 492 décrivent des tracteurs possédant des systèmes mécanisés complexes à bras articulés permettent la réalisation des entailles dans l'écorce des arbres et l'application d'un activateur, mais d'après A.W. Hodges & W.D. Shoup (Naval Stores Review, 1988, juillet/août, pages 13-19), leur rentabilité est faible car directement liée à la dureté et la planéité du terrain d'exploitation et leur prix est élevé.

Dans de nombreux brevets, on décrit des systèmes d'activation de la sécrétion de l'oléorésine utilisant généralement l'acide sulfurique, comme le rappelle le Pr.G.Stephan dans Naval Stores Review, 1990, novembre/décembre, page 13. On citera par exemple le brevet FR 2 160 742 qui décrit une solution contenant de l'acide sulfurique et un lignosulfite.

L'invention a donc pour objet un appareil selon les revendications 1.

D'autres modes de réalisation préféres de l'invention sont décrits dans les revendications dépendantes.

L'invention sera mieux comprise à l'aide de la description qui va suivre, donnée uniquement à titre d'exemple et faite en se référant aux dessins annexés, sur lesquels :
- la Fig.1 est une vue en perspective d'un appareil de réalisation d'entailles dans un tronc d'arbre, suivant l'invention;
- la Fig.2 est une vue de dessous d'une fraise utilisée dans l'appareil de la figure 1;
- la Fig.3 est une vue en élévation de la fraise de la figure 2;
- la Fig.4 est une vue en perspective éclatée d'un premier mode de réalisation de moyens de collecte de la gemme ;
- la Fig.5 est une vue en élévation et en coupe d'un second mode de réalisation des moyens de collecte de gemme ; et
- la Fig.6 est une vue en coupe d'un autre mode de réalisation d'un appareil de réalisation d'entailles suivant l'invention.

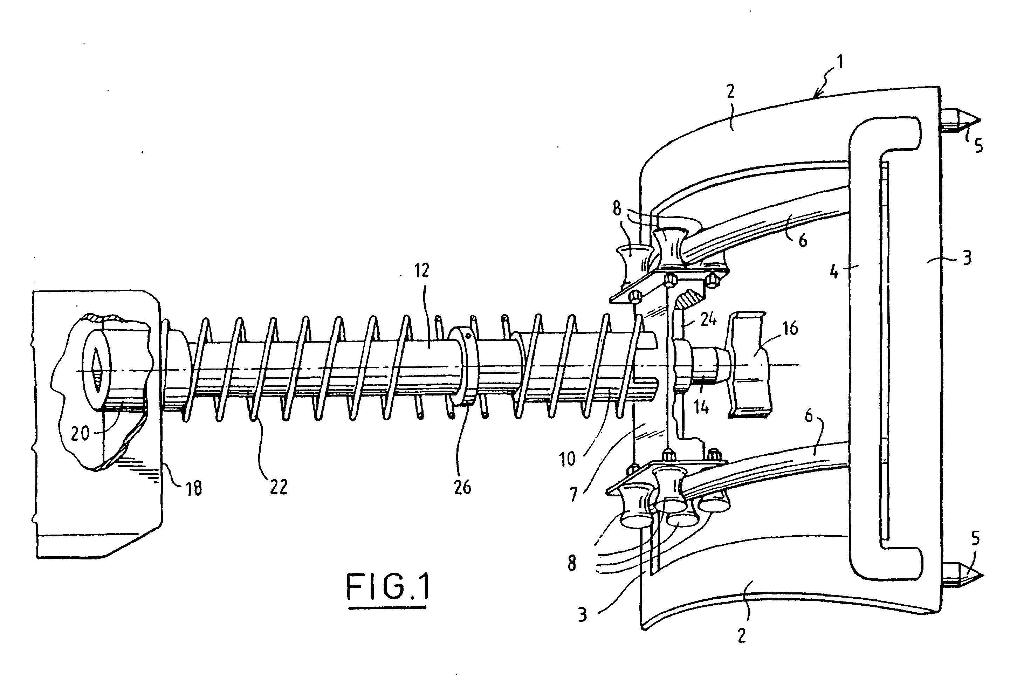

Sur la figure 1, on a représenté en perspective un appareil de réalisation d'entailles dans un tronc d'arbre, comprenant un châssis 1 en forme générale de cadre rectangulaire, comportant deux côtés 2 incurvés pour s'adapter à la courbure des troncs d'arbre et destinés par conséquent à être placés à peu près horizontalement.

Les deux autres côtés 3 du châssis 1 sont rectilignes et portent chacun une poignée 4 de maintien du châssis sur le tronc à traiter.

Le châssis est pourvu de moyens de fixation temporaire à l'écorce du tronc d'arbre constitués dans le présent exemple par des pointes coniques 5 disposées aux quatre coins du châssis.

La conicité des pointes 5 est choisie pour permettre un enfoncement relativement aisé des pointes dans l'écorce du tronc et le maintien en place du châssis tout en permettant le retrait de l'appareil sans effort important.

Selon d'autres modes de réalisation, le châssis peut également être réalisé carré, triangulaire ou de forme arrondie, concave comme sur la figure 1 ou plan.

Le nombre de moyens de fixation peut être différent de quatre.

Un agencement à trois pointes coniques disposées à 120° par rapport au centre du châssis peut être avantageux.

Le matériau du châssis est choisi pour sa robustesse et sa légèreté. On peut par exemple réaliser le châssis en alliage léger ou en acier.

Dans l'espace délimité par le cadre rectangulaire du châssis sont disposés des rails tubulaires 6 dont l'inclinaison par rapport aux côtés incurvés 2 du châssis est choisie en fonction de l'orientation de l'entaille à réaliser dans le tronc. Les rails 6 ont également une courbure correspondant à celle des côtés incurvés 2.

Sur les rails 6 est monté déplaçable un chariot 7 portant à chacune de ses extrémités deux trains de roues à gorges 8, qui enserrent un rail 6 correspondant et assurant ainsi le maintien du chariot sur les rails et son déplacement le long de ceux-ci.

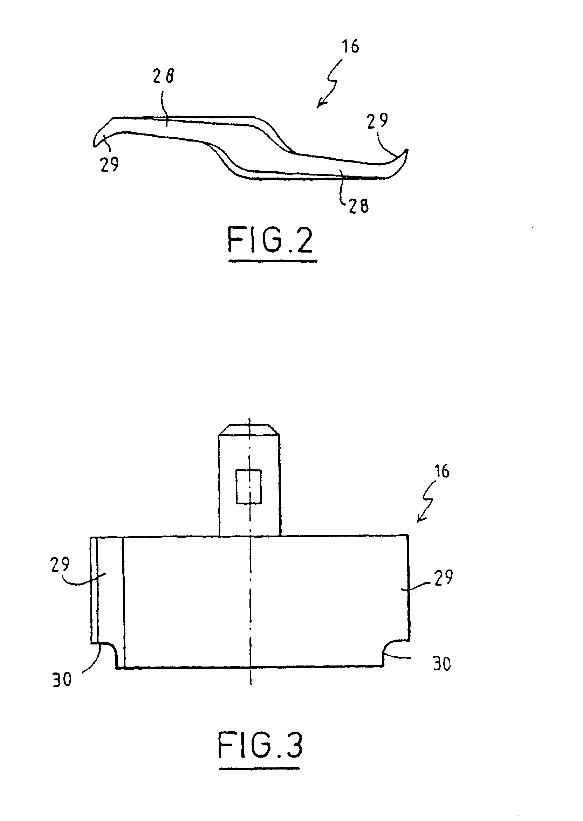

Sur le chariot 7 est monté un support de colonne tubulaire 10 dans lequel est montée à coulissement une colonne 12. Dans la colonne 12 est monté à rotation un arbre d'entraînement 14 qui porte à son extrémité proche du châssis un outil de coupe 16 constitué par une fraise qui sera décrite plus en détail en référence aux figures 2 et 3.

A son extrémité opposée au châssis 1, la colonne 12 porte un carter 18 de réception d'un moteur d'entraînement non représenté.

L'extrémité de l'arbre 14 débouchant dans le carter 18 porte un organe 20 d'accouplement avec l'arbre de sortie du moteur d'entraînement.

Ce moteur peut être un moteur électrique ou un moteur thermique.

Selon une variante, le moteur thermique peut être séparé de l'appareil et relié à celui-ci par un système de liaison flexible.

Entre le châssis 1 et le carter 18 est disposé autour du support de colonne 10 et de la colonne 12, un ressort hélicoïdal 22 de rappel de la colonne 12 et par conséquent de l'outil 16 en position inactive dans laquelle il est escamoté à l'intérieur d'un logement 24 ménagé dans le chariot 7.

La colonne 12 porte avantageusement un collier 26 réglable en position axiale et formant butée de limitation de la course de pénétration de l'outil dans le tronc de l'arbre.

En se référant maintenant aux figures 2 et 3, on voit que la fraise 16 est une fraise à deux dents 28 diamétralement opposées à tranchants 29 recourbés dans le sens de la rotation de la fraise et comportant à leur partie inférieure des évidements 30 clairement représentés à la figure 3. Les évidements 30 sont destinés à laisser un rebord de liber ou d'écorce sur le bord du fond de l'entaille.

Le profil de la fraise ainsi constitué permet d'obtenir une entaille avec un fond approprié et d'évacuer les copeaux d'écorce détachés lors de la réalisation de ladite entaille.

L'outil qui vient d'être décrit en référence aux figures 1 à 3 permet de réaliser dans un tronc d'arbre, soit une entaille circulaire de diamètre correspondant à celui de la fraise 16, soit une entaille de forme allongée de largeur correspondant au diamètre de la fraise 16 et de longueur déterminée par la course du chariot 7 le long de ses rails de guidage 6.

Il est également possible de se déplacer en oblique par rapport à la courbure du châssis pour faire varier la profondeur de l'entaille.

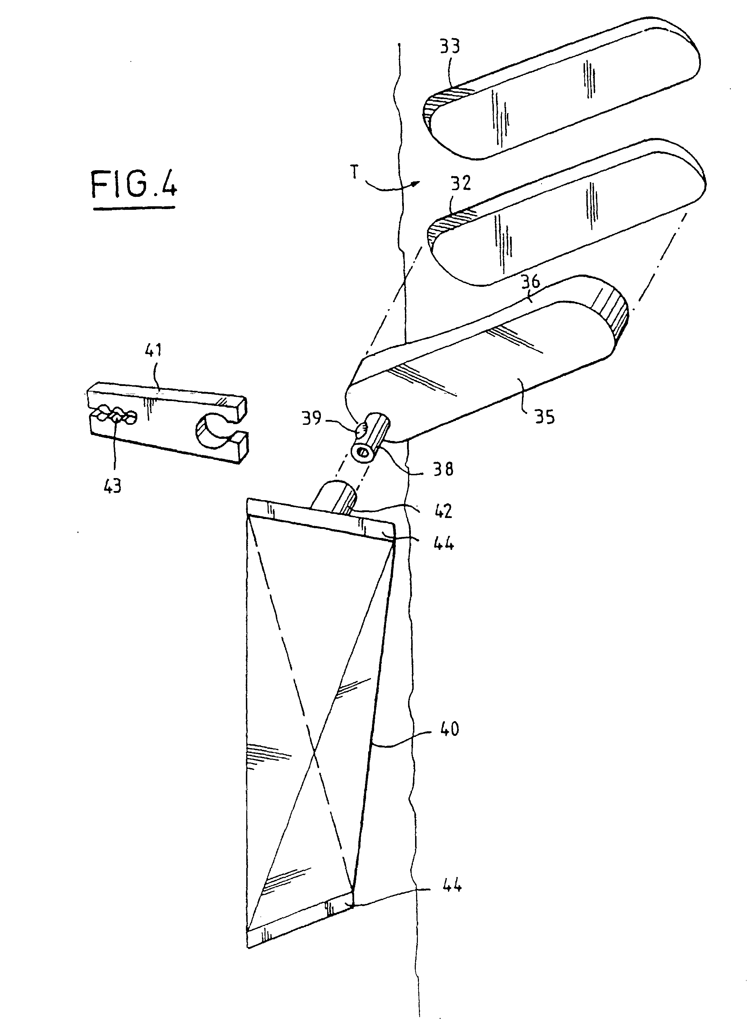

Deux entailles allongées du type précité sont représentées sur la figure 4 qui montre en vue éclatée les différents constituants du dispositif de collecte mettant en oeuvre le procédé de l'invention.

Les entailles 32,33 sont réalisées dans un tronc T à l'aide de l'appareil de la figure 1 après fixation de l'appareil sur le tronc à l'aide de ses pointes coniques 5, engagement de la fraise 16 entraînée en rotation dans l'écorce du tronc par déplacement axial de la colonne 12 à l'encontre de l'action du ressort de rappel 22, et ensuite par déplacement du chariot 7 le long des rails incurvés 6 sur une course correspondant à la longueur désirée de l'entaille.

Dans l'entaille 32 sur laquelle on a au préalable pulvérisé un produit activateur d'écoulement, on place une boîte collectrice 35 dont la forme correspond à celle de l'entaille.

La boîte 35 est enfoncée dans l'entaille 33 à la main ou de préférence avec un maillet jusqu'à ce quelle bute sur le liber.

La boîte collectrice est réalisée en matière plastique résistant à la gemme, par exemple en polypropylène, translucide ou opaque, ou en tout métal approprié tel que le zinc.

Elle comporte un bord 36 adapté à la courbure du tronc correspondant à la courbure choisie pour la forme du châssis 1 de l'appareil de la figure 1.

Selon un mode de réalisation particulier, la boîte lorsqu'elle est en matière plastique, est fabriquée par injection.

Par sa forme ou à l'aide d'une pièce métallique (non représentée), qui lui est ajoutée, elle assure l'étanchéité lors de l'écoulement de la gemme.

La boîte 36 est produite à partir d'un flux à bas point de fusion de polypropylène standard, par exemple : RD 369P de la société Borxalls.

Le matériau a été choisi en fonction des propriétés les plus importantes pour l'application envisagée telles que son module de flexion, sa dureté, sa durabilité et sa transparence.

Un stabilisant aux ultraviolets par exemple du Civrasorb 9441 de la société Ciba a été ajouté afin de prolonger la durée de vie des boites au soleil.

La boîte 36 comporte dans sa partie extérieure destinée à être engagée dans la partie basse de l'entaille 32, un tube d'écoulement 38 réalisé en la même matière que la boîte, en une seule pièce avec celle-ci. Le tube de dimensions appropriées, par exemple de 5 à 30 mm de diamètre et de quelques centimètres de longueur, laisse libre l'écoulement de la gemme par gravité.

Sur le tube 38 qui dans le présent exempte présente un bourrelet 39 venu de moulage avec le tube, est fixée une poche de collecte 40 en matière plastique.

La poche 40 comporte un embout rigide 42 soudé à la poche ayant une encoche non représentée, de réception du bourrelet 39 du tube d'écoulement 38.

La poche est réalisée en un matériau adapté au produit collecté.

Elle a une forme permettant un bon écoulement du produit collecté. par exemple une forme de berlingot ou à soufflets.

Elle est avantageusement fermée à ses deux extrémités par des soudures telles que 44.

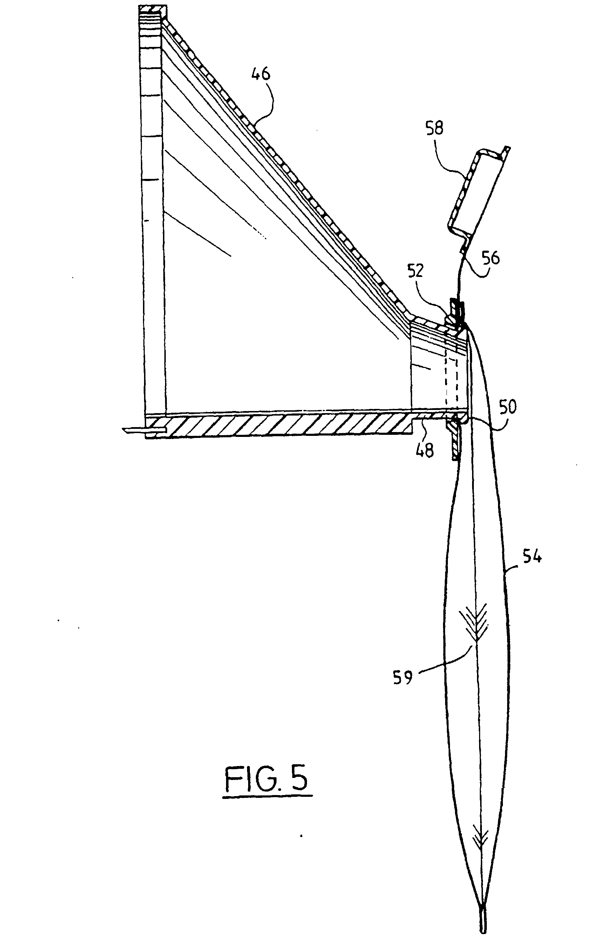

Le mode de réalisation représenté à la figure 5 comporte une boîte 46 en forme d'entonnoir, moulée par injection, destinée à une empreinte circulaire qui peut être réalisée à l'aide de l'appareil de la figure 1 sans déplacement de l'outil le long des guides 6 du châssis ou bien par un appareil similaire dépourvu de moyens de déplacement de l'outil transversalement au tronc.

Cette boîte comporte un tube d'écoulement 48 qui présente à son extrémité libre un petit bourrelet annulaire 50 de retenue d'un anneau rigide 52 soudé sur une poche de collecte 54 à laquelle est relié par une languette souple 56, un bouchon 58 destiné à la fermeture de la poche de collecte après son remplissage et son retrait du tube d'écoulement 48.

La poche est avantageusement réalisée en polypropylène.

Elle comporte de chaque côté des soufflets tels que le soufflet 59.

La fixation de la poche sur le tube d'écoulement peut être assurée par tous moyens de fixation comprenant une pièce rigide 41 clipsable par une extrémité sur la poche 40 placée sur le tube d'écoulement 38 et dont l'autre extrémité forme organe de fermeture 43 de la poche lorsqu'elle est pleine et retirée de la boîte.

La poche 54 est avantageusement initialement dépourvue d'orifice intérieur à l'anneau rigide 52. Elle est emboîtée sur le tube d'écoulement 48 de la boîte d'écoulement 46 par perforation.

La poche utilisée suivant l'invention permet de protéger la gemme de tout polluant extérieur tel que débris d'écorce, insectes, de l'air et de l'eau, du fait que l'oléorésine est récupérée dans un système fermé.

Le procédé de collecte suivant l'invention est mis en oeuvre de la façon suivante.

On procède tout d'abord à la préparation de l'arbre.

Pour limiter le déplacement en forêt, il est envisagé selon ce procédé, de réaliser une, deux ou trois entailles par tronc d'arbre selon des orientations différentes autour de l'arbre.

Les entailles réalisées avec un appareil conforme à l'invention peuvent être de formes diverses comme par exemple allongées comme celles destinées à recevoir des boîtes du type décrit en référence à la figure 4, circulaires pour recevoir des boîtes telles que celle décrite en référence à la figure 5, rectangulaires, triangulaires, carrées et disposées, horizontalement, verticalement ou en oblique. La profondeur d'une entaille peut varier linéairement sur sa longueur ou avoir une forme convexe, concave, ou présenter des irrégularités prédéfinies.

Le procédé décrit permet de limiter dans te temps, l'intervention sur l'arbre en raison de l'absence de préparation de l'arbre avant la réalisation de l'entaille.

En effet, il n'est pas nécessaire de procéder à un écorçage.

De même, l'étape de récupération du barras en fin de saison est supprimée.

Pour augmenter la productivité de la préparation de l'arbre, cette opération se pratique en équipe de deux personnes, car elle implique la mise en oeuvre de deux fonctions successives séparées.

La première personne ou piqueur réalise l'entaille avec l'appareil suivant l'invention décrit en référence à la figure 1 et la deuxième personne, le poseur, met en place sur cette entaille le dispositif permettant de recueillir la gemme avec un rendement maximal et une excellente pureté.

Le piqueur applique sur l'arbre non écorcé, à une hauteur comprise entre 0 et 200 cm du sol, l'appareil aisément transportable décrit en référence à la figure 1.

L'inclinaison des rails 6 de guidage du chariot 7, par rapport au châssis 1 permet de donner à l'entaille à réaliser, la forme et l'orientation désirées.

Le profil de la fraise 16 permet quant à lui de jouer sur la forme du fond de l'entaille et d'évacuer l'écorce.

Comme indiqué précédemment, le châssis est fixé temporairement au tronc de l'arbre par pénétration de ses pointes coniques 5 dans l'écorce de celui-ci, lesdites pointes assurant la fixation de l'appareil sur le tronc de l'arbre et permettant un retrait relativement aisé de cet appareil après la réalisation de l'entaille.

Une fois le châssis 1 appliqué contre le tronc, il est maintenu par les poignées 4 et la mise en route du moteur d'entraînement de l'arbre 14 portant la fraise 16, provoque la rotation de celle-ci et le déplacement de la colonne 12 par rapport au châssis 1 provoque la pénétration de la fraise 16 dans l'écorce du tronc et la réalisation d'une entaille de section circulaire. Le déplacement du chariot 7 portant l'outil le long des rails de guidage 6 du châssis 1 permet d'obtenir une forme d'entaille choisie, par exemple allongée, du type des entailles 32 et 33 allongées représentées à la figure 4.

Si nécessaire, un déplacement oblique par rapport au plan du châssis permet de faire varier la profondeur de l'entaille choisie.

Lorsque l'opération de réalisation d'une entaille est terminée, le ressort de rappel 22 assure le déplacement de la colonne 12 et par conséquent de la fraise 16 en translation par rapport au châssis et en fin de course, l'escamotage de la fraise 16 dans le logement 24 prévu dans le chariot 7.

La profondeur de l'entaille est fonction de chaque arbre, la fraise 16 entaillant le liber, mais s'arrêtant au contact du bois.

Le diamètre de perçage obtenu par la fraise est de 2 à 10 cm et peut avantageusement être compris entre 3 et 8 cm.

La courbure du châssis, c'est-à-dire la courbure de ces côtés incurvés 2, est de 15 à 40 cm de rayon afin de s'adapter aux formes et diamètres variés des troncs d'arbre.

Grâce à l'agencement de l'invention, l'outil 16 creuse une entaille de profondeur constante par rapport à l'écorce sur toute la longueur du déplacement de l'outil le long des rails de guidage 6 du chariot 7.

La rotation rapide de la fraise 16 ainsi que son profil particulier, assurent une évacuation efficace des copeaux d'écorce enlevés par celle-ci lors de la formation de l'entaille.

On obtient ainsi une entaille propre de forme choisie et très précise, en un temps très court, inférieur à 10 secondes, de préférence inférieur à 8 secondes.

L'appareil décrit en référence à la figure 1, est caractérisé par sa légèreté, son faible encombrement, sa rapidité d'exécution, la précision et la répétabilité de la forme des entailles réalisées, et sa simplicité.

En outre, cet appareil est ergonomique.

Grâce à la forme de la fraise 16 décrite en détail en référence aux figures 2 et 3, on obtient une découpe nette et propre des canaux secréteurs de gemme pour assurer un écoulement aisé de l'oléorésine.

Cet avantage ne peut être conservé dans le temps qu'en appliquant sur l'entaille, par exemple par pulvérisation, un produit évitant la cristallisation de la gemme et respectueux des tissus de l'arbre.

Le poseur applique ce produit sur la coupe supérieure de l'entaille, zone la plus productrice de gemme et en prévision des entailles ultérieures, réalisées au-dessus des précédentes.

Le poseur ferme aussitôt après le creux de l'entaille avec une boîte telle que la boîte représentée à la figure 4 ou celle représentée à la figure 5 selon la forme de l'entaille réalisée, à l'aide de l'appareil de la figure 1.

Comme indiqué plus haut, la boîte 35 ou 46, selon sa forme, est enfoncée à la main ou de préférence avec un maillet jusqu'à ce qu'elle bute sur le bois.

Une fois que la boite est en place, on fixe sur celle-ci, une poche de collecte 40 dans le cas du mode de réalisation de la figure 4 ou une poche 54 dans le cas du mode de réalisation de la figure 5, la poche étant fixée sur le tube d'écoulement 38,48 correspondant et maintenue sur ce tube d'écoulement par les moyens décrits en référence aux figures 4 et 5.

On voit que grâce à l'agencement de l'invention, la pose du système de récupération de la gemme est simple et rapide, et se fait dans un temps équivalent à celui de la réalisation de l'entaille.

Suivant le procédé de l'invention, le piqueur et le poseur travaillent au même rythme, évitant les pertes de temps nuisibles à la rentabilité de la collecte de la gemme.

Le travail de l'équipe est répété trois ou quatre fois dans la saison, qui s'étale de mai à septembre en respectant un intervalle de quatre à six semaines environ entre chaque intervention.

Chaque nouvelle entaille est réalisée au-dessus de la précédente, en respectant un intervalle de 2 à 10 cm. Cet intervalle doit correspondre à la hauteur nécessaire pour que la limite d'action de l'activateur de l'entaille précédente apparaisse sur le bois.

Deux récoltes sont réalisées dans la saison, l'une après la deuxième entaille et l'autre après la dernière.

Les poches sont facilement récupérées sur les boîtes par une simple manipulation de retrait.

Chacune de ces poches est aussitôt fermée, par exemple en ce qui concerne la poche 54 du mode de réalisation de la figure 5 par son bouchon 58 ou encore à l'aide d'un clips 41 pour le mode de réalisation de la figure 4.

Les poches ainsi fermées sont stockées dans des fûts à ouverture totale (non représentés). Lorsque un fût est plein, il est fermé à l'aide d'un couvercle tenu par un cerclage et dirigé vers un site de récupération de la gemme.

Les poches récupérées sont aspergées ou placées dans un bain ou encore traitées à la vapeur pour nettoyer leur partie extérieure, souillée pendant leur séjour sur les arbres tels que les pins.

Les poches ainsi nettoyées peuvent être ouvertes pour procéder à la récupération de la gemme.

La gemme restant sur les poches est récupérée par une séparation de l'oléorésine par rapport aux parois de la poche, grâce à un échauffement entre 50°C et 90°C, et de préférence entre 60°C et 80°C, en suspendant les poches ouvertes.

La matière plastique des poches est choisie recyclable et comme indiqué plus haut, cette matière est avantageusement le polypropylène.

La gemme récupérée est prête à être utilisée industriellement.

La récolte de la gemme ne laisse aucune pièce en matière plastique ou métallique néfaste à l'utilisation industrielle du pin. Le procédé suivant l'invention ne laisse sur l'arbre qu'une série de marques superposées sur une surface de 40 cm x 15 cm maximum, limitant les conséquences de l'intervention sur la qualité du bois.

### Exemple 1

Une expérimentation de récolte de gemme sur des pinus pinaster a été réalisée à l'aide d'un appareil dont le châssis en acier est de forme rectangulaire, de dimensions 25 x 35 cm, muni de deux poignées (figure 1). Ce châssis est concave, et son rayon de courbure est de 30 cm environ, correspondant à la taille moyenne des pins étudiés.

La face au contact de l'arbre est munie de pointes de longueurs diffé rentes allant de 2 à 7 cm, de forme conique, et toutes parallèles entre elles.

Deux guides 6 épousant la forme du châssis permettent le déplacement contrôlé d'un outil mécanique constitué de la fraise 16 mise en rotation par un moteur électrique (non représenté). Le diamètre de la fraise est de 40 mm et sa forme est telle qu'elle lui permet après enlèvement de l'écorce, de déraper sur le bois sans l'attaquer. La fraise 16 peut se déplacer perpendiculairement au châssis en poussant la colonne porte-outil 12 vers l'arbre.

Le ressort de rappel 22 assure le retour de la fraise en position initiale lorsqu'on arrête la poussée.

Le poids total de l'appareil est de 6 kg. L'alimentation du moteur électrique est assurée par des batteries portées à la ceinture ou par un groupe électrogène disposé sur un véhicule tout terrain individuel utilisé pour le déplacement en forêt.

L'appareil a permis de réaliser des entailles de forme identique pour chaque arbre (figure 4) en déplaçant sur une longueur de 9 cm, une fraise de 4 cm de diamètre. Ce déplacement se fait suivant une inclinaison voisine de 10° par rapport à l'horizontale.

L'entaille est nettoyée simultanément par la rotation de l'outil 16. Lorsque le piqueur a fini ce travail, le poseur applique par pulvérisation un activateur dont les performances sont au moins égales à celles du SICAGEM décrit dans le brevet FR.2,160,742.

Le poseur met ensuite en place une boîte en polypropylène épousant parfaitement la forme de l'entaille et la courbure du fond. La boîte utilisée est translucide et munie d'un tuyau à sa partie basse (figure 4). Une poche en polypropylène à haute densité en forme de berlingot telle que la poche 40 est alors fixée sur la boîte grâce à un système de clips. Cette poche a une contenance de 1,5 litre et des dimensions de 20 cm de large sur 30 cm de haut.

L'équipe a ainsi préparé 300 arbres par jour en moyenne.

Une première poche est récoltée et refermée après la fin de la production de la deuxième entaille de la saison, une deuxième, en fin de saison sur la dernière entaille.

La collecte des poches se fait dans des fûts revêtus de 220 litres à ouverture totale. Il est récoité entre 1 et 2,5 litres de gemme par arbre.

Les fûts pleins sont fermés et dirigés vers le centre de traitement de la gemme.

Les poches fermées sont nettoyées à la vapeur puis coupées automatiquement pour être vidées par suspension au-dessus de récipients de collecte. L'opération est réalisée dans une enceinte chauffée à 60°C pour récupérer toute la gemme. La gemme ainsi récupérée contient 70% de colophane et 30% d'essence de térébenthine.

### Exemple 2

Identique à l'exemple 1 mais dans lequel l'appareil de réalisation d'entailles est entraîné par un moteur thermique placé dans le dos de l'utilisateur avec un hamais approprié et relié à la colonne porte-fraise par un système d'entraînement flexible (non représenté). Le poids du moteur est de 3 kg, et celui du châssis muni de la fraise est de 4,5 kg.

### Exemple 3

Identique à l'exemple 1 mais dans lequel le moteur de l'appareil de la figure 1 est un moteur thermique.

### Exemple 4

Identique à l'exemple 3 mais dans lequel le châssis de l'appareil est triangulaire, de 45 cm de côté.

### Exemple 5

Identique à l'exemple 1 mais dans lequel le châssis est de forme circulaire, de 20 cm de diamètre. La forme de l'entaille est circulaire d'un diamètre de 8 cm, et la fraise a un diamètre compris entre 4 et 8 cm. La forme de la boîte est identique à celle de l'entaille (figure 5).

### Exemple 6

Identique à l'exemple 1 mais dans lequel l'entaille est triangulaire de côté de 9 cm.

### Exemple 7

Identique à l'exemple 1 mais dans lequel la poche est rectangulaire à soufflets.

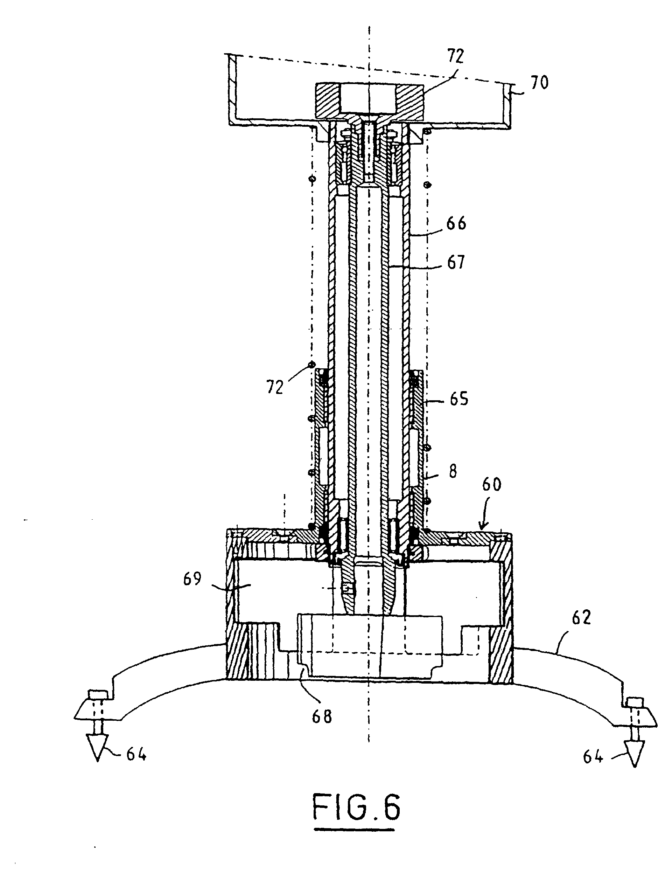

Dans l'exemple qui va suivre, on va mettre en oeuvre le procédé de l'invention en utilisant les moyens de collecte décrits en référence à la figure 5, mis en place sur une entaille de forme circulaire réalisée par exemple à l'aide d'un appareil représenté à la figure 6.

### Exemple 8

On réalise une entaille circulaire à l'aide de l'appareil représenté à la figure 6.

Cet appareil comprend un châssis 60 en forme de cloche pourvu à son extrémité ouverte de deux bras incurvés 62, diamétralement opposés, qui s'étendent symétriquement par rapport à la cloche 60 et qui portent des pointes coniques 64 de fixation de l'appareil par pénétration dans l'écorce d'un tronc.

La cloche 60 comporte un prolongement tubulaire axial 65 dans lequel est montée déplaçable axialement une colonne 66.

Dans la colonne 66, est monté à rotation un arbre 67 qui porte à son extrémité intérieure à la cloche 60, une fraise 68 du type décrit en référence aux figures 2 et 3.

A son extrémité opposée à la cloche 60, la colonne 66 porte un carter 70 de réception d'un moteur thermique d'entraînement non représenté.

Entre le carter 70 et la cloche 60, est disposé un ressort hélicoïdal de rappel 72 qui entoure la colonne et dont la fonction est la même que celle du ressort 22 de l'appareil de la figure 1.

La cloche 60 assure la protection de la fraise 68 lorsque celle-ci est escamotée en position inactive dans la cloche et est ajourée de lumières 69 pour assurer l'éjection des copeaux et poussières.

On voit donc que, comme dans l'appareil décrit en référence à la figure 1, la fraise 68 entraînée en rotation par le moteur thermique disposé dans le carter 70, par l'intermédiaire de l'arbre 67, pourvu à cet effet à son extrémité débouchant dans le carter 70, d'un organe d'accouplement 72, est également déplaçable axialement avec la colonne 66 à l'encontre de l'action du ressort de rappel 72 pour venir en contact avec l'écorce du tronc et réaliser dans celui-ci une entaille circulaire.

L'entaille ainsi réalisée a un diamètre de l'ordre de 8 cm.

## Revendications

1. Appareil de réalisation d'entailles dans le tronc d'un arbre pour la collecte de produits sécrétés par l'arbre, notamment de la gemme du pin ou de l'oléorésine produite par des arbres résineux, l'appareil comportant :
- un châssis (1 ; 60) pourvu de moyens (5 ; 64) de fixation temporaire à l'écorce du tronc,
- un outil de coupe (16 ; 68) monté sur le châssis (1 ; 60),
- un moteur d'entraînement dudit outil de coupe (16 ; 68) en rotation sur un arbre d'entraînement (14 ; 67),
**caractérisé en ce que** l'arbre d'entraînement (14 ; 67) est monté dans une colonne (12 ; 66) coulissante par rapport au châssis (1 ; 60) suivant l'axe de rotation de l'arbre d'entraînement (14 ; 67), lequel axe de rotation est dirigé dans une direction d'engagement de l'outil de coupe (16 ; 68) dans le sens de la profondeur de l'écorce de l'arbre.

2. Appareil suivant la revendication 1, **caractérisé en ce que** ledit outil de coupe (16 ; 68) est une fraise à deux dents (28) diamétralement opposées à tranchants (29) recourbés dans le sens de la rotation de la fraise et comportant à leur partie inférieure des évidements (30).

3. Appareil suivant l'une quelconque des revendications 1 et 2, **caractérisé en ce qu'**il comporte des moyens (6,7) permettant le déplacement de l'outil de coupe (16) sur le châssis (1) sur une course correspondant à une forme d'entaille choisie le long d'une portion de la surface du tronc.

4. Appareil suivant la revendication 3, **caractérisé en ce que** les moyens permettant le déplacement de l'outil (16) de coupe sur le châssis (1) comprennent des rails de guidage incurvés (6) et un chariot porte-colonne (7) monté déplaçable le long des rails de guidage (6) au moyen de trains de roues à gorges (8) enserrant chaque rail de guidage (6).

5. Appareil suivant la revendication 4, **caractérisé en ce que** ledit châssis (1) est de forme rectangulaire et comporte deux côtés incurvés (2) d'adaptation à la courbure du tronc d'arbre.

6. Appareil suivant la revendication 5, **caractérisé en ce que** les rails de guidage (6) sont inclinés par rapport aux côtés incurvés (2) du châssis (1) et définissent l'inclinaison de l'entaille (32,33).

7. Appareil suivant l'une quelconque des revendications précédentes, **caractérisé en ce qu'**un ressort (22; 72) de rappel de la colonne (12 ; 66) vers une position de dégagement de l'outil de coupe (16 ; 68) est interposé entre ledit châssis (1 ; 60) et ladite colonne (12 ; 66).

8. Appareil suivant la revendication 7 et l'une quelconque des revendications 4 à 6, **caractérisé en ce que** la colonne (12) est montée coulissante dans un support de colonne tubulaire (10) porté par le chariot (7), le chariot (7) comportant un évidement (24) de réception de l'outil (16) de coupe en position de dégagement, le ressort de rappel (22) de la colonne (12) étant interposé entre le chariot (7) et un carter (18) de réception du moteur d'entraînement.

9. Appareil suivant l'une quelconque des revendications 1 et 2, **caractérisé en ce que** ledit châssis (60) est en forme de cloche ajourée, comportant un prolongement tubulaire (65) dans lequel est monté déplaçable axialement ladite colonne (66) suivant ledit axe de rotation de l'arbre d'entraînement (14 ; 67), un ressort (72) de rappel de la colonne (66) vers une positon de dégagement de l'outil de coupe (68) étant interposé entre ledit châssis (60) et ladite colonne (66), l'outil de coupe (68) étant escamoté dans la cloche (60) en position de dégagement.

10. Appareil suivant l'une quelconque des revendications précédentes, **caractérisé en ce que** les moyens de fixation temporaire du châssis (1 ; 60) à l'écorce du tronc comprennent des pointes (5 ; 64) parallèles les unes aux autres et coniques, portées par le châssis (1 ; 60).

11. Appareil suivant les revendications 9 et 10, **caractérisé en ce qu'**à la cloche sont fixés deux bras diamétralement opposés (62) qui s'étendent symétriquement par rapport à la cloche et qui portent à leurs deux extrémités lesdites pointes coniques (64).

12. Appareil suivant l'une quelconque des revendications précédentes, **caractérisé en ce qu'**il comporte des moyens (26) de limitation de la profondeur d'engagement de l'outil de coupe (16 ; 68).

13. Appareil suivant l'une quelconque des revendications précédentes, **caractérisé en ce que** le moteur d'entraînement de l'outil est un moteur thermique ou un moteur électrique.

## Patentansprüche

1. Vorrichtung zur Herstellung von Einschnitten in einem Baumstamm zum Ernten von von dem Baum ausgeschiedenen Produkten, insbesondere von Kiefernharz oder von Ölharz, das von harzhaltigen Bäumen erzeugt wird, wobei die Vorrichtung umfaßt:
- ein Gestell (1; 60), das mit Mitteln (5; 64) zur vorübergehenden Befestigung an der Rinde des Stamms versehen ist,
- ein auf dem Gestell (1; 60) montiertes Schneidwerkzeug (16; 68),
- einen Motor zum Drehantrieb des Schneidwerkzeugs (16; 68) auf einer Antriebswelle (14; 67),
**dadurch gekennzeichnet, daß** die Antriebswelle (14; 67) in einer Säule (12; 66) montiert ist, die bezüglich des Gestells (1; 60) in der Drehachse der Antriebswelle (14; 67) verschiebbar ist, wobei diese Drehachse in einer Richtung der Einführung des Schneidwerkzeugs (16; 68) in Richtung der Tiefe der Rinde des Baums gerichtet ist.

2. Vorrichtung nach Anspruch 1, **dadurch gekennzeichnet, daß** das Schneidwerkzeug (16; 68) ein Fräser mit zwei diametral entgegengesetzten Zähnen (28) ist, die in der Richtung der Drehung des Fräsers umgebogen sind und in ihrem unteren Bereich Aussparungen (30) aufweisen.

3. Vorrichtung nach einem der Ansprüche 1 und 2, **dadurch gekennzeichnet, daß** sie Mittel (6, 7) aufweist, die die Bewegung des Schneidwerkzeugs (16) auf dem Gestell (1) auf einem Weg gestatten, der einer gewählten Einschnittform längs eines Bereichs der Oberfläche des Stamms entspricht.

4. Vorrichtung nach Anspruch 3, **dadurch gekennzeichnet, daß** die Mittel, die die Bewegung des Schneidwerkzeugs (16) auf dem Gestell (1) gestatten, gekrümmte Führungsschienen (6) und einen Säulentragwagen (7) umfassen, der längs der Führungsschienen (6) mit Hilfe von Sätzen von Nuträdern (8) beweglich montiert ist, die jede Führungsschiene (6) einschließen.

5. Vorrichtung nach Anspruch 4, **dadurch gekennzeichnet, daß** das Gestell (1) von rechteckiger Form ist und zwei gekrümmte Seiten (2) zur Anpassung an die Krümmung des Baumstamms aufweist.

6. Vorrichtung nach Anspruch 5, **dadurch gekennzeichnet, daß** die Führungsschienen (6) bezüglich der gekrümmten Seiten (2) des Gestells (1) geneigt sind und die Neigung des Einschnitts (32, 33) definieren.

7. Vorrichtung nach einem der vorhergehenden Ansprüche,
**dadurch gekennzeichnet, daß** eine Feder (22; 72) zur Rückholung der Säule (12; 66) auf eine ausgerückte Stellung des Schneidwerkzeugs (16; 68) zu zwischen das Gestell (1; 60) und die Säule (12; 66) eingesetzt ist.

8. Vorrichtung nach Anspruch 7 und einem der Ansprüche 4 bis 6, **dadurch gekennzeichnet, daß** die Säule (12) in einem von dem Wagen (7) getragenen rohrförmigen Säulenhalter (10) verschiebbar montiert ist, wobei der Wagen (7) eine Aussparung (24) zur Aufnahme des Schneidwerkzeugs (16) in ausgerückter Stellung aufweist und die Feder (22) zur Zurückholung der Säule (12) zwischen den Wagen (7) und ein Gehäuse (18) zur Aufnahme des Antriebsmotors eingesetzt ist.

9. Vorrichtung nach einem der Ansprüche 1 und 2, **dadurch gekennzeichnet, daß** das Gestell (60) die Form einer durchbrochenen Glocke besitzt, die eine rohrförmige Verlängerung (65) aufweist, in der die Säule in der Drehachse der Antriebswelle (14; 67) axial beweglich montiert ist, wobei eine Feder (72) zur Zurückholung der Säule (66) auf eine ausgerückte Stellung des Schneidwerkzeugs (68) zu zwischen das Gestell (60) und die Säule (66) eingesetzt ist, wobei das Schneidwerkzeug (68) in der ausgerückten Stellung in die Glocke (60) versenkt ist.

10. Vorrichtung nach einem der vorhergehenden Ansprüche,
**dadurch gekennzeichnet, daß** die Mittel zur vorübergehenden Befestigung des Gestells (1; 60) an der Rinde des Stamms zueinander parallele und konische Spitzen (5; 64) aufweisen, die von dem Gestell (1; 60) getragen werden.

11. Vorrichtung nach den Ansprüchen 9 und 10, **dadurch gekennzeichnet, daß** an der Glocke zwei diametral entgegengesetzte Arme (62) befestigt sind, die sich bezüglich der Glocke symmetrisch erstrecken und die an ihren beiden Enden die konischen Spitzen (64) tragen.

12. Vorrichtung nach einem der vorhergehenden Ansprüche,
**dadurch gekennzeichnet, daß** sie Mittel (26) zur Begrenzung der Eindringtiefe des Schneidwerkzeugs (16; 68) aufweist.

13. Vorrichtung nach einem der vorhergehenden Ansprüche,
**dadurch gekennzeichnet, daß** der Motor zum Antrieb des Werkzeugs ein Verbrennungsmotor oder ein Elektromotor ist.

## Claims

1. Apparatus for making cuts in the trunk of a tree for collecting products secreted by the tree, notably pine resin or oleoresin produced by resinous trees, the apparatus comprising:
- a frame (1;60) provided with means (5;64) for temporary attachment to the bark of the trunk,
- a cutting tool (16;68) mounted on the frame (1;60),
- a motor for driving said cutting tool (16;68) in rotation on a drive shaft (14;67), **characterised in that** the drive shaft (14;67) is mounted in a column (12;66) which slides relative to said frame (1;60) along the rotation axis of the drive shaft (14;67), said rotation axis being directed in a direction of engagement of the cutting tool (16;68) in the direction of the depth of the bark of the tree.

2. Apparatus according to claim 1, **characterised in that** said cutting tool (16;68) is a cutting head with two diametrically opposite teeth (28) with cutting edges (29) which are curved in the direction of rotation of the cutting head and which comprise recesses (30) at their lower end.

3. Apparatus according to either of claims 1 and 2, **characterised in that** it comprises means (6,7) for moving the cutting tool (16) on the frame (1) along a path corresponding to the shape of a cut to be provided along part of the surface of the trunk.

4. Apparatus according to claim 3, **characterised in that** the means for displacing the cutting tool (16) on the frame (1) comprise curved guide rails (6) and a carriage (7) carrying the column, which is mounted to be movable along the guide rails (6) by means of sets of grooved wheels (8) engaging each guide rail (6).

5. Apparatus according to claim 4, **characterised in that** the frame (1) is rectangular in shape and has two curved sides (2) for adapting to the curvature of the tree trunk.

6. Apparatus according to claim 5, **characterised in that** the guide rails (6) are inclined relative to the curved sides (2) of the frame (1) and define the inclination of the cut (32,33).

7. Apparatus according to any one of the preceding claims, **characterised in that** a spring (22;72) for returning the column (12;66) to a release position for the cutting tool (16;68) is interposed between said frame (1;60) and said column (12;66).

8. Apparatus according to claim 7 and any one of. claims 4 to 6, **characterised in that** the column (12) is mounted to be slidable in a tubular column support (10) carried by the carriage (7), the carriage (7) comprising a recess (24) for accommodating the cutting tool (16) in the released position, the spring (22) for returning the column (12) being interposed between the carriage (7) and a housing (18) for accommodating the drive motor.

9. Apparatus according to either of claims 1 and 2, **characterised in that** the frame (60) is in the form of a perforated bell comprising a tubular extension (65) in which said column (66) is mounted to be axially moveable in the direction of the rotation axis of the drive shaft (14;67), a spring (72) for returning the column (66) towards a release position for the cutting tool (68) being interposed between said frame (60) and said column (66), the cutting tool (68) being retracted into the bell (60) in the released position.

10. Apparatus according to any one of the preceding claims, **characterised in that** the means for temporarily fixing the frame (1;60) to the bark of the trunk comprise conical spikes (5;64) parallel to one another which are carried by the frame (1;60).

11. Apparatus according to claims 9 and 10, **characterised in that** two diametrically opposite arms (62) are fixed to the bell, extending symmetrically relative to the bell and having said conical spikes (64) at their two ends.

12. Apparatus according to any one of the preceding claims, **characterised in that** it comprises means (26) for limiting the depth of engagement of the cutting tool (16;68).

13. Apparatus according to any one of the preceding claims, **characterised in that** the drive motor for the tool is a thermal motor or an electric motor.
